# EUROPÄISCHE PATENTSCHRIFT

(11) **EP 2 279 853 B1**
(45) Veröffentlichungstag und Bekanntmachung des Hinweises auf die Patenterteilung: **26.09.2012**
(21) Anmeldenummer: 10166601.4
(22) Anmeldetag: 21.06.2010
(51) Int. Cl.: B29D 30/24, B29D 30/32

(54) **Verfahren zum Herstellen von Reifenrohlingen auf einer Reifenaufbautrommel**
Method for producing tyre blanks on a tyre construction drum
Procédé de fabrication d'ébauches de pneu sur un tambour de montage de pneus

(30) Priorität: 22.07.2009 DE 102009026223
(43) Veröffentlichungstag der Anmeldung: 02.02.2011
(73) Patentinhaber: Continental Reifen Deutschland GmbH, 30165 Hannover (DE)
(72) Erfinder: Pawlik, Karl-Heinz, 30455, Hannover (DE)
(74) Vertreter: Finger, Karsten

(56) Entgegenhaltungen:
- DE-C1- 19 934 791
- GB-A- 864 115
- SU-A1- 717 851
- SU-A1- 1 754 472
- TR-T2- 200 200 245
- US-A- 5 660 677

## Beschreibung

Die Erfindung betrifft ein Verfahren zum Herstellen von Reifenrohlingen auf einer Reifenaufbautrommel.

Bei der herkömmlichen Herstellung von Neureifen erfolgt ein Herstellungsschritt auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkerne gefaltet. Dieser Vorgang des Hochkrempelns der Reifenseitenwände erfolgt entweder mit sogenannten Seitenbombierbälgen oder mit einem kranzförmig über den Umfang angeordneten Rollenhebelsystem. Beim Einsatz von Seitenbombierbälgen werden zwei im Bereich der Seitenwandlagen angeordnete Blähbälge aufgeblasen, die auf diese Weise die Seitenwände an die bombierte Karkasse pressen. Der Hochschlagvorgang mit Hilfe von Seitenbombierbälgen kann den Nachteil aufweisen, dass diese Bälge nicht bis in die Schulterbereiche des Reifenrohlings wirken, wodurch manuelle Nacharbeit erforderlich wird. Darüber hinaus sind die Seitenbombierbälge einem hohen Verschleiß unterworfen, wobei ein entsprechend häufiger Austausch erforderlich ist, der mit sehr viel Zeitaufwand verbunden ist.

Das Hochschlagen der Seitenwände mit Hilfe eines Rollenhebelsystems ist beispielsweise in der DE 199 34 791 C1 offenbart. Bei dieser Vorrichtung erfolgt das Auseinanderspreizen des Rollenhebelsystems über einen pneumatischen Antrieb, der aus zwei separaten Pneumatikzylindern besteht. Die beiden Pneumatikzylinder werden separat mit Druckluft beaufschlagt, wodurch das Reifenhebelsystem auseinanderspreizt und dadurch die Seitenwände an der Karkasse hochschlägt.

Ein wesentlicher Nachteil bei diesem Prinzip besteht darin, dass beim Auflegen der Reifenaufbauteile auf die Reifenaufbautrommel, die Rollen der Rollenhebel eine ungleichmäßige Oberfläche darstellen. Nach dem Aufwickeln der Reifenaufbauteile auf die Reifenaufbautrommel, insbesondere der Reifeninnenseele mit den Reifenseitenteilen erfolgt ein Zusammenspleißen der gegenüberliegenden Enden der Materialbahn. Durch die unregelmäßige Oberfläche der Rollenhebel kann der Spleißvorgang in diesem Bereich nur unzureichend erfolgen. Eine mangelhafte Spleißverbindung der Reifenaufbauteile würde eine Qualitätseinbuße bei den herzustellenden Reifen bedeuten.

Der Erfindung liegt die Aufgabe zugrunde, ein Verfahren zum Herstellen von Reifenrohlingen auf einer Reifenaufbautrommel zu schaffen, mit dem die Fertigungsqualität der herzustellenden Fahrzeugreifen erhöht wird.

Gelöst wird die Aufgabe mit einem Verfahren gemäß Anspruch 1.

Ein Vorteil der Erfindung ist insbesondere darin zu sehen, dass durch das Verfahren die Fertigungsqualität der herzustellenden Fahrzeugreifen wesentlich erhöht wird. Durch das vollständige Abdecken der Rollenhebel beim Zusammenspleißen der Materialbahn bzw. der Reifenaufbauteile wird im Bereich der Rollen eine vollständig geschlossene glatte Oberfläche geschaffen. Auf dieser geschlossenen und glatten Oberfläche lässt sich der Spleißvorgang über die gesamte Breite der Materialbahn optimal durchführen. Der Materialspleiß der jeweiligen Materialbahn besitzt somit über seine gesamte Breite eine hohe Verbindungsqualität.

In einer vorteilhaften Weiterbildung der Erfindung ist vorgesehen, dass die Wickelunterstützung eine vollständig geschlossene Metallglocke umfasst.

Der Einsatz einer vollständig geschlossenen Metallglocke hat den Vorteil, dass diese Art der Wickelunterstützung auf einfache Weise in axialer Richtung hin- und her verfahren werden kann.

In einer weiteren vorteilhaften Weiterbildung der Erfindung ist vorgesehen, dass die Wickelunterstützung pneumatisch und mit einem Pneumatikzylinder in axialer Richtung der Reifenaufbautrommel verfahren wird. Ein derartiger pneumatischer Antrieb lässt sich einfach realisieren und zeichnet sich durch eine hohe Verfahrgeschwindigkeit aus.

In einer weiteren vorteilhaften Weiterbildung der Erfindung ist vorgesehen, dass die Wickelunterstützung mit einem doppelwirkenden Pneumatikzylinder in axialer Richtung der Reifenaufbautrommel verfahren wird, wobei die Wickelunterstützung einen zylinderförmigen Fortsatz aufweist. Dadurch kann die Wickelunterstützung mit einer hohen Geschwindigkeit in axialer Richtung hin- und her verfahren werden.

In einer weiteren vorteilhaften Weiterbildung der Erfindung ist vorgesehen, dass die Wickelunterstützung mit einem einfachwirkenden Pneumatikzylinder in axialer Richtung der Reifenaufbautrommel verfahren wird, wobei der Rückhub der Wickelunterstützung über die Erzeugung eines Unterdruckes im Pneumatikzylinder erfolgt.

Dadurch kann man bei der Realisierung der Reifenaufbaumaschine auf den zylinderförmigen Fortsatz verzichten, der für einen doppelwirkenden Pneumatikzylinder erforderlich wäre.

In einer weiteren vorteilhaften Weiterbildung der Erfindung ist vorgesehen, dass die Wickelunterstützung eine Antihaft-Beschichtung gegenüber Gummimaterialien aufweist. Nach dem Zusammenspleißen der gegenüberliegenden Enden der entsprechenden Materialbahn wird die Metallglocke in axialer Richtung wegverfahren, damit die darunter liegenden Rollenhebel freigelegt werden. Durch die Antihaftbeschichtung der Wickelunterstützung wird unterbunden, dass die aufliegende Materialbahn durch Scherkräfte mit bewegt und dadurch verformt wird.

In einer weiteren vorteilhaften Weiterbildung der Erfindung ist vorgesehen, dass die Wickelunterstützung aus Stahl oder Aluminium besteht. Diesen beiden Materialien lassen sich einfach mit einer Antihaftbeschichtung versehen.

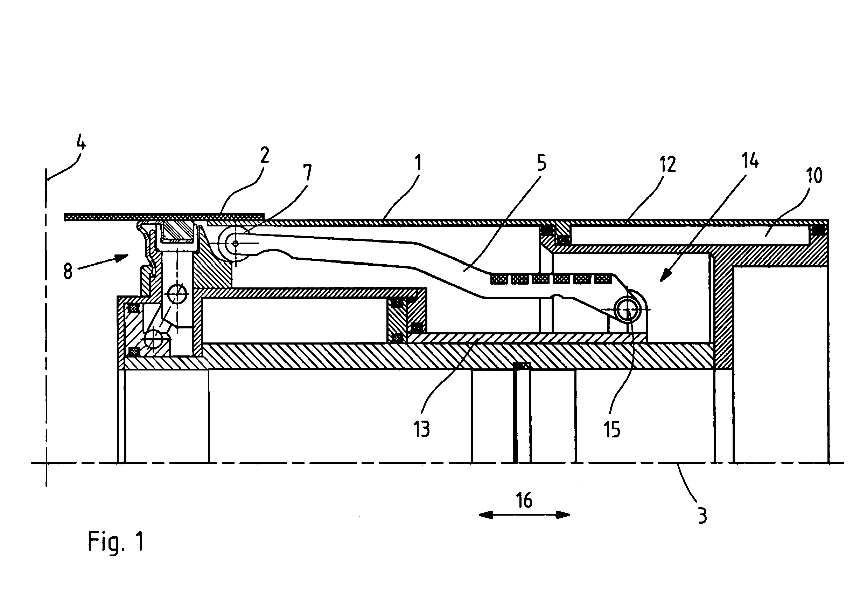

Anhand eines Ausführungsbeispiels soll die Erfindung näher erläutert werden. Es zeigen: Fig. 1 bis Fig. 4: unterschiedliche Schritte des erfindungsgemäßen Verfahrens.

Die Figur 1 zeigt einen Teilausschnitt der Reifenaufbautrommel. Die Reifenaufbautrommel ist im Wesentlichen achsensymmetrisch zur Trommelachse 3 und zur Trommelmitte 4 aufgebaut, weshalb die Darstellung der jeweils gegenüberliegenden Bauteile in der Figur nicht dargestellt sind.

In der Fig. 1 ist der Verfahrensschritt dargestellt, bei dem die Rollen der Rollenhebel durch die Wickelunterstützung 1 vollständig abgedeckt sind. Die Wickelunterstützung besteht aus einer vollständig geschlossenen zylindrischen Metallglocke. Nachdem die Reifenaufbauteile mit der Reifenseitenwand auf die Reifenaufbautrommel aufgewickelt sind, erfolgt der Spleißvorgang der gegenüberliegenden Enden. Aufgrund der vollständig geschlossenen Oberfläche der Wickelunterstützung 1 kann der Materialspleiß der Reifenseitenwand 2 auch in diesem Bereich mit einer hohen Qualität ausgeführt werden. Die Kemspannvorrichtung 8 dient dazu, die Reifenkerne aufzunehmen und an der entsprechenden Position zu setzen.

Die Wickelunterstützung 1 besitzt einen zylinderförmigen Fortsatz 12, der mit dem doppel wirkenden Zylinder 10 in Verbindung steht. Über den doppelwirkenden Zylinder 10 wird die Wickelunterstützung 1 in axialer Richtung 16 hin- und her verfahren.

An dem Hebeltragkörper 13 ist ein Hebelsystem 14 an der Lagerung 15 drehbar angebunden. Das Hebelsystem 14 besteht aus einer Vielzahl von um die Trommelachse 3 angeordneten Rollenhebeln 5, die jeweils mit dem Hebeltragkörper 13 drehbar verbunden sind. Beim Verfahren des Hebeltragkörpers 13 in Richtung zur Trommelmitte 4 spreizen sich die einzelnen Rollenhebel auseinander und schlagen auf diese Weise die Seitenwand 2 an der bereits bombierten Karkasse hoch. Die am Rollenhebel 5 gelagerte Rolle 7 drückt bei diesem Vorgang die Seitenwand 2 gegen die Außenseite der Karkasse und verbindet dadurch beide Lagen miteinander.

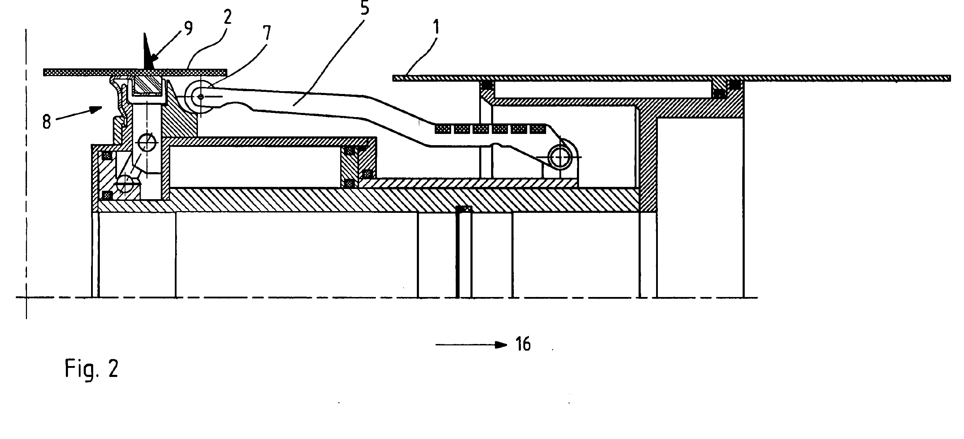

Die Fig. 2 zeigt den Verfahrensschritt, bei dem die Wickelunterstützung 1 in axialer Richtung 16 zurückverfahren wurde. Dadurch werden über den gesamten Umfang alle Rollenhebel 5 und die dazugehörigen Rollen 7 freigelegt. Vor diesem Verfahrensschritt erfolgt das Setzen der Wulstkerne 9 mit den entsprechenden Kernreitern. Die Wulstkerne 9 werden dabei von der Kemspannvorrichtung 8 gehalten. Die Reifenseitenwände 2 hängen nach diesem Verfahrensschritt frei über den Rollen 7.

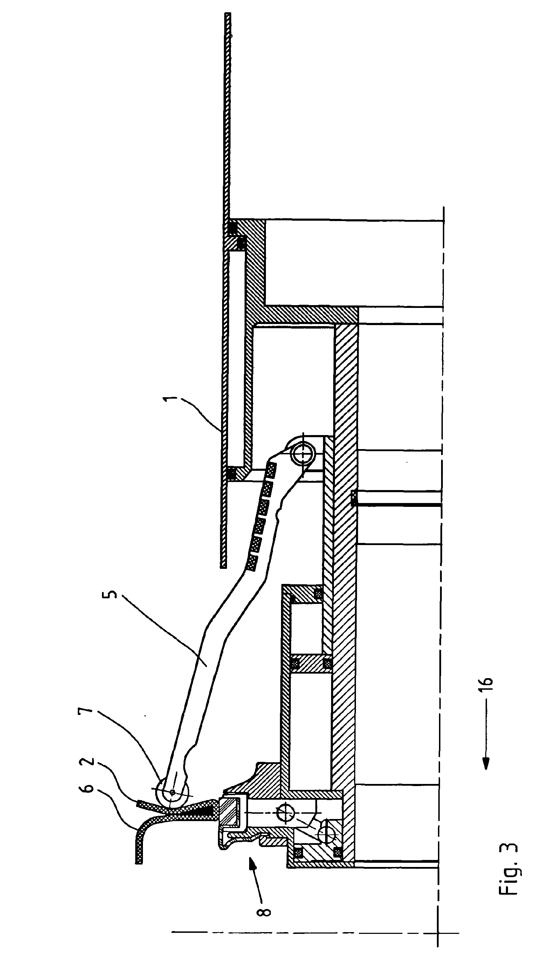

Die Fig. 3 zeigt den Verfahrensschritt, bei dem die Reifenseitenwand 2 mit den Rollenhebeln 5 und den Rollen 7 an der Karkasse 6 hochgeschlagen wird. Bei diesem Vorgang erfolgt das Bombieren der Karkasse 6, wobei die Kemspannvorrichtungen 8 in axialer Richtung 16 aufeinander zufahren. Die Wickelunterstützung 1 ist bei diesem Verfahrensschritt vollständig zurückgefahren und behindert dadurch nicht das Auseinanderspreitzen der Rollenhebel 5.

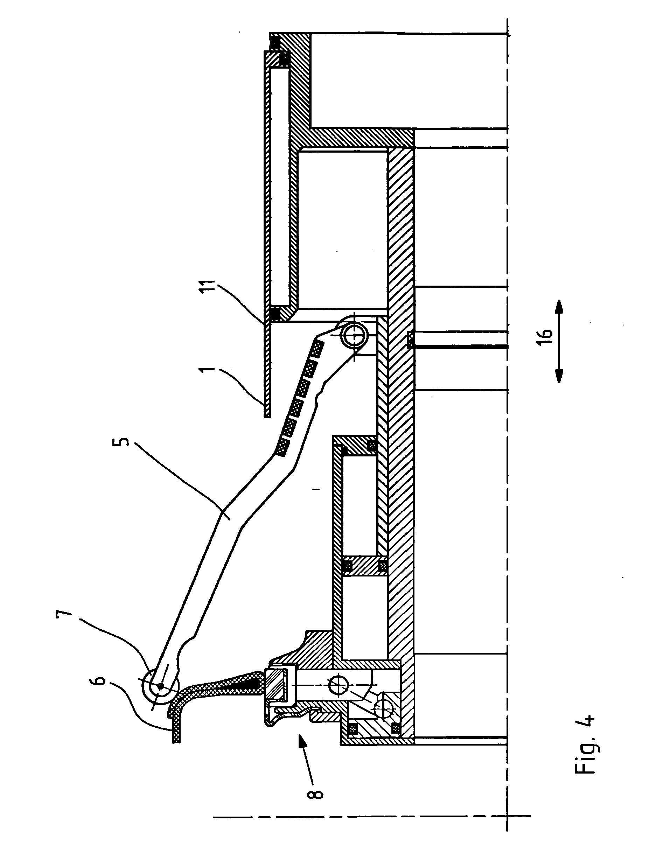

Die Fig. 4 zeigt ein alternatives Ausführungsbeispiel. Bei diesem Ausführungsbeispiel besitzt die Wickelunterstützung 1 keinen zylinderförmigen Fortsatz wie bei dem Ausführungsbeispiel in den Figuren 1 bis 3. Die Wickelunterstützung 1 wird über einen einfach wirkenden Zylinder 11 in axialer Richtung 16 hin- und her bewegt. Bei diesem einfach wirkenden Zylinder erfolgt der Rückhub der Wickelunterstützung 1 durch die Erzeugung eines Vakuums im Zylinder 11. Die Figur zeigt den Verfahrensschritt, bei dem die Wickelunterstützung 1 vollständig zurückgefahren ist und dadurch alle Rollenhebel 5 freigelegt sind. Die Rollenhebel 5 sind in einem auseinandergespreitzten Zustand dargestellt, bei dem die Reifenseitenwand an der Karkasse 6 hochgeschlagen wurde.

### Bezugszeichenliste (ist Teil der Beschreibung)

- 1: Wickelunterstützung
- 2: rechte Reifenseitenwand
- 3: Trommelachse
- 4: Trommelmitte
- 5: Rollenhebel
- 6: Karkasse
- 7: Rolle
- 8: Kemspannvorrichtung
- 9: Wulstkern
- 10: doppelwirkender Zylinder
- 11: einfachwirkender Zylinder
- 12: zylinderförmiger Fortsatz
- 13: Hebeltragkörper
- 14: Hebelsystem
- 15: Lagerung
- 16: axiale Richtung

## Patentansprüche

1. Verfahren zum Herstellen von Reifenrohlingen auf einer Reifenaufbautrommel mit folgenden Schritten:
a) vollständiges Abdecken der Rollenhebel (5) mit Rollen (7) mit einer in axialer Richtung (16) zur Reifenaufbautrommel verfahrbaren zylinderförmigen Wickelunterstützung (1)
b) Auflegen von Reifenaufbauteilen in Form von Materialbahnen auf die Reifenaufbautrommel, wobei mit den Reifenaufbauteilen zumindestens die Reifeninnenseele und der Seitenstreifen für eine Reifenseitenwand (2) umfasst sind
c) Zusammenspleissen des vorderen und hinteren Ende der Reifenaufbauteile auf der Reifenaufbautrommel, wobei die Wickelunterstützung (1) eine geschlossene Oberfläche zum optimalen Zusammenspleissen der Materialbahnen bildet,
d) Setzen der Reifenkerne (9) mit einer Kernklemmvorrichtung (8),
e) Zurückfahren der Wickelunterstützung (1) nach axial außen und Freilegen einer Vielzahl von radial angeordneten Rollenhebeln (5) mit Rollen (7),
f) Bombieren des Reifenrohlings und gleichzeitiges radiales Auseinanderfahren aller Rollenhebel (5) zum Hochschlagen der Reifenseitenwände (2), wobei die Reifenseitenwände (2) mit den einzelnen Rollen (7) der Rollenhebel (5) gleichmäßig umgekrempelt werden,
g) Fertigstellung des Reifenrohlings mit einem konventionellen Herstellverfahren.

2. Verfahren nach Anspruch 1,
**dadurch gekennzeichnet, dass**
die Wickelunterstützung (1) eine vollständig geschlossene Metallglocke umfasst.

3. Verfahren nach einem der vorhergehenden Ansprüche,
**dadurch gekennzeichnet, dass**
die Wickelunterstützung pneumatisch und mit einem Pneumatikzylinder (10, 11) in axialer Richtung (16) der Reifenaufbautrommel verfahren wird.

4. Verfahren nach einem der vorhergehenden Ansprüche,
**dadurch gekennzeichnet, dass**
die Wickelunterstützung (1) mit einem doppelwirkenden Pneumatikzylinder (10) in axialer Richtung (16) der Reifenaufbautrommel verfahren wird, wobei die Wickelunterstützung (1) einen zylinderförmigen Fortsatz (12) aufweist.

5. Verfahren nach einem der vorhergehenden Ansprüche,
**dadurch gekennzeichnet, dass**
die Wickelunterstützung (1) mit einem einfachwirkenden Pneumatikzylinder (11) in axialer Richtung (16) der Reifenaufbautrommel verfahren wird, wobei der Rückhub (11) der Wickelunterstützung über die Erzeugung eines Unterdruckes im Pneumatikzylinder (11) erfolgt.

6. Verfahren nach einem der vorhergehenden Ansprüche,
**dadurch gekennzeichnet, dass**
die Wickelunterstützung (1) eine Antihaft-Beschichtung gegenüber Gummimaterialien aufweist.

7. Verfahren nach einem der vorhergehenden Ansprüche,
**dadurch gekennzeichnet, dass**
die Wickelunterstützung (1) aus Stahl oder Aluminium besteht.

## Claims

1. Method for producing tyre blanks on a tyre-building drum, having the following steps:
a) completely covering the roller levers (5) with rollers (7) by means of a cylindrical winding support (1) which is movable in the axial direction (16) with respect to the tyre-building drum,
b) laying tyre-building parts in the form of material strips onto the tyre-building drum, wherein the tyre-building parts include at least the tyre inner core and the side strips for a tyre side wall (2),
c) splicing together the front and rear ends of the tyre-building parts on the tyre-building drum, wherein the winding support (1) forms a closed surface for optimum splicing-together of the material strips,
d) fixing the tyre cores (9) by means of a core clamping device (8),
e) retracting the winding support (1) axially outwards and exposing a multiplicity of radially arranged roller levers (5) with rollers (7),
f) shaping the tyre blank and simultaneously moving all of the roller levers (5) radially apart in order to turn up the tyre side walls (2), wherein the tyre side walls (2) are rolled up uniformly by the individual rollers (7) of the roller levers (5),
g) finishing the tyre blank by means of a conventional production process.

2. Method according to Claim 1,
**characterized in that**
the winding support (1) comprises a fully closed metal bell.

3. Method according to one of the preceding claims,
**characterized in that**
the winding support is moved in the axial direction (16) of the tyre-building drum pneumatically and by means of a pneumatic cylinder (10, 11).

4. Method according to one of the preceding claims,
**characterized in that**
the winding support (1) is moved in the axial direction (16) of the tyre-building drum by means of a double-acting pneumatic cylinder (10), wherein the winding support (1) has a cylindrical projection (12).

5. Method according to one of the preceding claims,
**characterized in that**
the winding support (1) is moved in the axial direction (16) of the tyre-building drum by means of a single-acting pneumatic cylinder (11), wherein the return stroke (11) of the winding support is realized through the generation of a negative pressure in the pneumatic cylinder (11).

6. Method according to one of the preceding claims,
**characterized in that**
the winding support (1) has an antifriction coating with respect to rubber materials.

7. Method according to one of the preceding claims,
**characterized in that**
the winding support (1) is composed of steel or aluminium.

## Revendications

1. Procédé de fabrication d'ébauches de bandage de roue sur un tambour de formation de bandages de roue, le procédé présentant les étapes suivantes :
a) recouvrir complètement le levier (5) portant des galets (7) par un appui d'enroulement (1) de forme cylindrique apte à être déplacé dans la direction axiale (16) par rapport au tambour de formation de bandage de roue,
b) poser des composants de formation de bandage de roue qui présentent la forme de bandes de matériau sur le tambour de formation de bandage de roue, au moins l'âme intérieure du bandage de roue et le ruban latéral d'une paroi latérale (2) du bandage de roue étant inclus dans les composants de montage de bandage de roue,
c) ligaturer l'extrémité avant et l'extrémité arrière des composants de formation de bandage de roue sur le tambour de formation de bandage de roue, l'appui d'enroulement (1) formant une surface fermée de manière à ligaturer de manière optimale les bandes de matériau,
d) poser les âmes (9) de bandage de roue à l'aide d'un dispositif (8) de serrage d'âmes,
e) reculer l'appui d'enroulement (1) axialement vers l'extérieur et libérer plusieurs leviers (5) à galets (7) disposés radialement,
f) bomber l'ébauche de bandage de roue et en même temps écarter radialement tous les leviers (5) à galets pour relever les parois latérales (2) du bandage de roue, les parois latérales (2) du bandage de roue étant rabattues régulièrement par les différents galets (7) du levier (5) à galets, et
g) finir l'ébauche de bandage de roue à l'aide d'un procédé classique de fabrication.

2. Procédé selon la revendication 1, **caractérisé en ce que** l'appui d'enroulement (1) présente une cloche métallique complètement fermée.

3. Procédé selon l'une des revendications précédentes, **caractérisé en ce que** l'appui d'enroulement est déplacé pneumatiquement et à l'aide d'un vérin pneumatique (10, 11) dans la direction axiale (16) du tambour de formation de bandage de roue.

4. Procédé selon l'une des revendications précédentes, en ce que l'appui d'enroulement (1) est déplacé dans la direction axiale (16) du tambour de formation de bandage de roue à l'aide d'un vérin pneumatique (10) à double effet, l'appui d'enroulement (1) présentant un prolongement cylindrique (12).

5. Procédé selon l'une des revendications précédentes, en ce que l'appui d'enroulement (1) est déplacé dans la direction axiale (16) du tambour de formation de bandage de roue à l'aide d'un vérin pneumatique (11) à simple effet, la course de recul (11) de l'appui d'enroulement s'effectuant en établissant une dépression dans le vérin pneumatique (11).

6. Procédé selon l'une des revendications précédentes, en ce que l'appui d'enroulement (1) présente un revêtement antiadhésif vis-à-vis des matériaux de caoutchouc.

7. Procédé selon l'une des revendications précédentes, en ce que l'appui d'enroulement (1) est constitué d'acier ou d'aluminium.
